Europäisches Patentamt

European Patent Office

Office européen des brevets

(11) Veröffentlichungsnummer: **0 266 743 B1**

# EUROPÄISCHE PATENTSCHRIFT

(45) Veröffentlichungstag der Patentschrift: **04.03.92**

(51) Int. Cl.⁵: **H02M 3/156**

(21) Anmeldenummer: **87116168.3**

(22) Anmeldetag: **03.11.87**

(54) **Schaltungsanordnung zur Erzeugung einer internen Versorgungsspannung bei getakteten Stromversorgungen.**

(30) Priorität: **06.11.86 DE 3637824**

(43) Veröffentlichungstag der Anmeldung:
**11.05.88 Patentblatt 88/19**

(45) Bekanntmachung des Hinweises auf die
Patenterteilung:
**04.03.92 Patentblatt 92/10**

(84) Benannte Vertragsstaaten:
**AT CH DE ES FR GB IT LI NL SE**

(56) Entgegenhaltungen:
DE-A- 3 501 998
US-A- 4 085 358

(73) Patentinhaber: **SIEMENS AKTIENGESELL-
SCHAFT**
**Wittelsbacherplatz 2**
**W-8000 München 2(DE)**

(72) Erfinder: **Panse, Hubert, Dipl.-Ing.**
**Kleinstrasse 52**
**W-8000 München 70(DE)**
Erfinder: **Schlegel, Wolfgang, Dipl.-Ing. (FH)**
**Mathunistrasse 9 a**
**W-8000 München 21(DE)**

## Beschreibung

Die Erfindung betrifft eine Schaltungsanordnung gemäß dem Oberbegriff des Patentanspruches 1.

Bei getakteten Stromversorgungen wird üblicherweise die Ausgangsspannung mit einer Referenzspannung verglichen und der Differenzbetrag einem Regelverstärker zugeführt. Über das Tastverhältnis des Halbleiterschalters erfolgt die entsprechend gesteuerte Energiezufuhr an eine Speicherdrossel oder an einen Transformator. Die für die Ansteuerelektronik erforderlliche geeignete Betriebsspannung (interne Versorgungsspannung), wird z.B. über einen Vorwiderstand und eine Z-Diode aus der gleichgerichteten Netzeingangsspannung oder aus einem Transformator erzeugt. In bestimmten Anwendungsfällen solcher getakteter Stromversorgungen wird eine interne Versorgungsspannung benötigt, die höher ist als die Eingangsspannung. Dies ist zum Beispiel der Fall, wenn der Betrag der Wandlerausgangsspannung so nahe an dem Wert der Eingangsspannung liegt, daß integrierte Schaltkreise der Ansteuerelektronik, wie Komparatoren, die mit der Ausgangsspannung des Wandlers verbunden sind, außerhalb ihres Gleichakteingangsspannungsbereiches betrieben werden. Deshalb muß die Versorgungsspannung des Komparators immer höher sein als die höhere der beiden vom Komparator zu vergleichenden Spannungen.

Zur Lösung dieses Problems ist es üblich, neben dem eigentlichen getakteten Spannungswandler einen zusätzlichen Wandler (Hochsetzsteller) vorzusehen, der die nötige interne Versorgungsspannung aus der Eingangsspannung bereitstellt. Der hierfür benötigte Aufwand an Bauteilen sowie der Raum für einen zusätzlichen Wandler zur Erzeugung der internen Versorgungsspannung, die höher ist als die Eingangsspannung, steht vielfach dem Konzept einer kostengünstigen und raumsparenden Gesamtstromversorgung entgegen.

Aufgabe der Erfindung ist es, den Aufwand in einer Schaltungsanordnung zur Erzeugung einer internen Versorgungsspannung in getakteten Stromversorgungen, deren Wert höher ist als der höchste Wert der Eingangsspannung, zu reduzieren.

Gelöst wird diese Aufgabe mit den im kennzeichnenden Teil des Patentanspruches 1 angegebenen Maßnahmen.

Vorteilhafte Ausgestaltungen und Weiterbildungen sind in den Unteransprüchen gekennzeichnet.

Die erfindungsgemäße Schaltungsanordnung zeichnet sich dadurch aus, daß nur wenige zusätzliche passive Bauelemente zur Erzeugung der internen Versorgungsspannung benötigt werden. Mit Hilfe von im wesentlichen zwei Kondensatoren, von denen einer während der Sperrphase des Leistungsschalters auf die Ausgangsspannung aufgeladen wird und der während der Leitendphase des Leistungsschalters seine zuvor gespeicherte Ladung an den zweiten Kondensator abgibt, wird eine interne Versorgungsspannung erzeugt. Da der zweite Kondensator mit einem Anschluß an den Eingang des Wandlers angeschaltet ist, läßt sich gegenüber einem gemeinsamen Bezugspunkt für die Eingangsspannung eine Versorgungsspannung abgreifen, welche um eine Differenz, gebildet aus Ausgangsspannung und Kollektor-Emitterspannung des Leistungsschalters, höher liegt als die Eingangsspannung (UV = UE + (UA-UCE) z.B. UE = 20 Volt, UA = 5 Volt, UCE = 1 Volt, UV = 20V + (5 Volt - 1 Volt) = 24 Volt).

Damit wird sichergestellt, daß auch bei stark schwankender Eingangsspannung, wie sie z.B. bei Batterie- oder Akkubetrieb eintreten kann, die Versorgungsspannung von in der Regelschaltung des Wandlers vorhandenen Komparatoren immer höher liegt als die höhere der beiden vom Komparator zu vergleichenden Spannungen. Dies ermöglicht es, unter anderem, Komparatoren so einzusetzen, daß ein Eingang der Komparatoren direkt mit dem Ausgang verbunden werden kann, ohne daß die Komparatoren außerhalb ihres Gleichakteingangsspannungsbereiches betrieben werden können.

Zur Erhöhung des Wirkungsgrades der Schaltungsanordnung kann nach einer weiteren Ausgestaltung der Erfindung zwischen den beiden Kondensatoren eine Spule eingefügt werden, die zur Spannungsüberhöhung an dem zweiten Kondensator führt.
Um ungewollte Ent- bzw. Umladungen der beiden Kondensatoren zu vermeiden, werden Dioden derart eingeschaltet, daß der erste Kondensator während der Leitendphase des Leistungsschalters seine Ladung nicht an den Ausgang abgeben kann und daß während der Sperrphase des Leistungsschalters die Ladung am zweiten Kondensator verbleibt.
Eine solche Schaltungsanordnung hat weiter den Vorteil, daß sie bei allen getakteten Stromversorgungen, die einen Durchflußwandler enthalten, anwendbar ist.

Einen bekannten Durchflußwandler zeigt z.B. die deutsche Offenlegungschrift DE-A-3501998.

Anhand der Zeichnung wird die Erfindung nun näher erläutert. Dabei zeigt

Figur 1   einen an sich bekannten Schaltregler ohne die erfindungsgemäße Schaltungsanordnung,

Figur 2   einen Schaltregler nach Figur 1 mit einer erfindungsgemäßen Schaltungsanordnung zur Erzeugung einer internen Versorgungsspannung, die höher ist als die Eingangsspannung

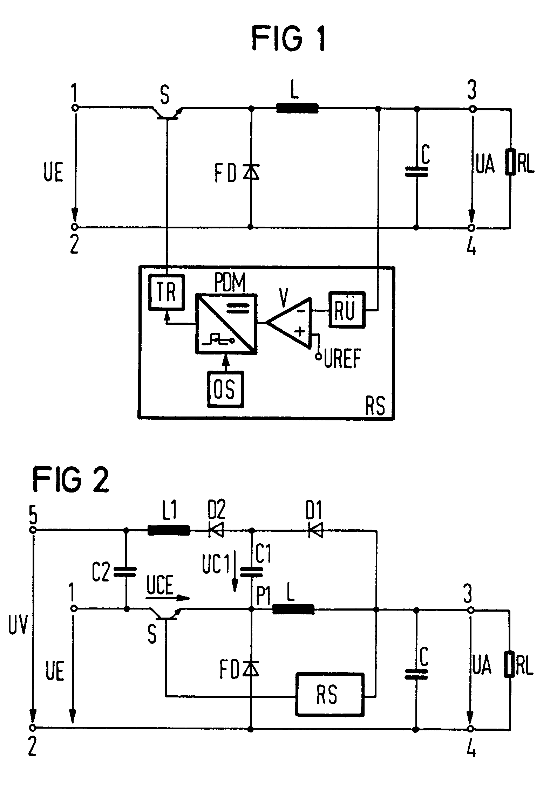

In Figur 1 ist ein Durchflußwandler dargestellt, bei dem in bekannter Weise über einen Leistungsschalter S eine Speicherdrossel L periodisch mit Strom geladen wird. Während der Leitendphase des Leistungsschalters S fließt der Strom über diesen, über die Speicherdrossel L und weiter über einen angeschlossenen Lastwiderstand RL, an dem eine geregelte Ausgangsspannung UA anliegt. Zur Glättung des Stromes ist ausgangsseitig an der Speicherdrossel L ein Glättungskondensator C angeschaltet. Während der Sperrphase des Leistungsschalters S wird der Strom über eine Freilaufdiode FD aufrechterhalten. Die Ausgangsspannung UA wird mit Hilfe einer Regelschaltung RS stabilisiert, die das Taktverhältnis des Taktvorganges des Leistungsschalters S beeinflußt. Hierzu wird die Ausgangsspannung UA über ein Rückkopplungsnetzwerk RÜ abgefragt und mittels eines Regelverstärkers V mit einer festen Referenzspannung UREF verglichen. Das Ausgangssignal des Regelverstärkers V, die Regelabweichung wird zusammen mit einer Sägezahn- oder Rechteckspannung eines Oszillators OS einem Pulsdauermodulator PDM zugeführt, der daraus ein Rechtecksignal mit Oszillatorfrequenz erzeugt, dessen Tastverhältnis von der Regelabweichung abhängt. Eine nachgeschaltete Treiberstufe TR steuert den Leistungsschalter S an.

Figur 2 zeigt die erfindungsgemäße Schaltungsanordnung zur Erzeugung einer internen Versorgungsspannung im Zusammenhang mit dem in Figur 1 dargestellten Durchflußwandler, wobei gleiche Bezugszeichen für gleich funktionierende Bauteile verwendet werden.

An den Klemmen 1 und 2 liegt eine Eingangsspannung UE an und an einem Lastwiderstand RL, der zwischen den Klemmen 3 und 4 liegt, ist eine geregelte Ausgangsspannung UA abgreif-bar. Zwischen den Klemmen 1 und 3 liegt eine Serienschaltung, bestehend aus der Kollektor-Emitter-Strecke eines Leistungsschalters S und einer Speicherdrossel L. Die Klemme 2 ist unmittelbar mit der Klemme 4 verbunden und stellt einen gemeinsamen Bezugspunkt für die Eingangsspannung UE, die Ausgangsspannung UA und einer internen Versorgungsspannung UV dar. Zur Glättung der Ausgangsspannung UA ist zwischen den Klemmen 3 und 4 ein Kondensator C geschaltet. Die Anode einer Freilaufdiode FD ist an die Verbindungsleitung der beiden Klemmen 2 und 4 angeschaltet, während die Kathode dieser Freilaufdiode FD mit einem auf der Verbindungsleitung zwischen dem Emitter des Leistungsschalters S und der Speicherdrossel L liegenden Knotenpunkt P1 verbunden ist. Zur Regelung der Ausgangsspannung UA ist an dem ausgangsseitigen Wicklungsende der Speicherdrossel L eine Regelschaltung RS angeschaltet, die den Leistungsschalter S über seinen Basisanschluß steuert. Die Regelschaltung RS kann dabei identisch der im Zusammenhang mit Figur 1 beschriebenen Regelschaltung RS sein.

Im Unterschied zu dem in Figur 1 dargestellten Durchflußwandler ist bei der erfindungsgemäßen Schaltungsanordnung nach Figur 2 zusätzlich die Ausgangsklemme 3 über eine Serienschaltung zweier in Flußrichtung gepolter Dioden D1, D2, einer Spule L1 und eines Kondensators C2 mit der Eingangsklemme 1 verbunden. Außerdem ist ein weiterer Kondensator C1 so eingeschaltet, daß ein Anschluß dieses Kondensators C1 am Knotenpunkt P1 und der andere Anschluß auf der Verbindungsleitung der beiden Dioden D1 und D2 liegt. An einer Klemme 5, die sowohl mit dem eingangsseitigen Wicklungsende der Spule L1 als auch mit dem Kondensator C2 verbunden ist, ist eine interne Versorgungsspannung UV abgreifbar, deren Amplitude höher liegt als die der Eingangsspannung.

Die Umwandlung der Eingangsspannung UE in eine geregelte Ausgangsspannung UA eines solchen Durchflußwandlers geschieht auf dieselbe Weise wie in der im Zusammenhang mit Figur 1 beschriebenen Schaltung.

Im folgenden wird das Funktionsprinzip der Erzeugung einer internen Versorgungsspannung UV beschrieben, die von der Eingangsspannung UE abgeleitet und deren Betrag größer als derjenige der Eingangsspannung UE ist.

Da der Kondensator C1 einerseits vor der Speicherdrossel L mit dem Emitter des Leistungsschalters S verbunden ist, und andererseits über eine in Sperrichtung gepolte Diode D1 hinter der Speicherdrossel L1 mit der Ausgangsspannung UA verbunden ist, lädt er sich, sobald der Leistungsschalter S sperrt, auf eine Spannung auf, die der Ausgangsspannung UA entspricht. Wird der Leistungsschalter S mit Hilfe der Regelschaltung RS leitend geschaltet, so gibt der Kondensator C1 seine gespeicherte Ladung über die Diode D2 an den Kondensator C2 ab. Dieser lädt sich auf eine Spannung auf, die der Differenz der Spannung UC1 am Kondensator C1 und der Kollektor-Emitter-Spannung UCE des Leistungsschalters S entspricht. Da im Idealfall (keine Verluste in den Dioden D1, FD und vernachlässigbarer ohmscher Widerstand der Speicherdrossel L) die Spannung UC1 gleich der Ausgangsspannung UA ist und weil am Kollektor des Leistungsschalters S die Eingangsspannung UE anliegt, läßt sich an der Klemme 5 eine Spannung abgreifen, welche um die Differenz, gebildet aus der Ausgangsspannung UA und der Kollektor-Emitterspannung UCE des Leistungsschalters S höher ist, als die Eingangsspannung UE. Diese Spannung steht jetzt als interne Versorgungsspannung UV für z.B. integrierte Schaltkreise zur Verfügung. Die Diode D1 verhindert während der Leitendphase des Leistungsschalters S, daß sich der Kondensator C1 über einen angeschlossenen Lastwiderstand RL am Ausgang des Durchflußwandlers entlädt. Die Diode D2 verhindert während des Sperrzustandes des Leistungsschalters S, daß die Ladung des Kondensators C2 wieder an den Kondensator C1 abgegeben wird. Um den Wirkungsgrad dieser erfindungsgemäßen Schaltungsanordnung zu verbessern, wird zwischen der Diode D2 und dem Kondensator C2 eine Drossel L1 geringer Induktivität zur Erzeugung einer Spannungsüberhöhung am Kondensator C2 geschaltet.

**Patentansprüche**

1. Schaltungsanordnung zur Erzeugung einer internen Versorgungsspannung (UV) bei Stromversorgungen, die nach dem Prinzip eines Durchflußwandlers mit einem getakteten Leistungsschalter (S) und einer Speicherdrossel (L) arbeiten und bei denen die interne Versorgungsspannung (UV) höher liegt als die Eingangsspannung (UE) des Durchflußwandlers, **dadurch gekennzeichnet,** daß parallel zur Schaltstrecke des getakteten Leistungsschalters (S) Speicher- und Sperrmittel (C1, C2, L1,D2) vorgesehen sind, mit einem ersten Kondensator (C1), der während des Sperrzustandes des Leistungsschalters (S) über eine an den Ausgang angeschlossene erste Diode (D1) auf den Wert der Ausgangsspannung (UA) des Durchflußwandlers aufgeladen wird und der während der Leitendphase des Leistungsschalters (S) diese Ladung über eine weitere Diode (D2) an den zweiten Kondensator (C2) abgibt,wobei eine an dem zweiten Kondensator (C2) gegenüber einem mit der Eingangsspannung (UE) gemeinsamen Bezugspunkt (2) abgreifbare interne Versorgungsspannung (UV) anliegt, welche um eine Differenz, gebildet aus der Ausgangsspannung (UA) des Durchflußwandlers und der Kollektor-Emitterspannung (UCE) des Leistungsschalters (S), höher liegt als die Eingangsspannung (UE).

2. Schaltungsanordnung nach Anspruch 1, **dadurch gekennzeichnet,** daß der erste Kondensator (C1) mit einem Anschluß vor der Speicherdrossel (L) des Durchflußwandlers und mit seinem anderen Anschluß über die in Sperrichtung gepolte erste Diode (D1) mit einer Ausgangsklemme (3) des Durchflußwandlers geschaltet ist.

3. Schaltungsanordnung nach Anspruch 1, **dadurch gekennzeichnet**, daß der zweite Kondensator (C2) mit einem Anschluß mit der Eingangsspannung (UE) verbunden ist und der andere Anschluß über die in Sperrichtung gepolte Diode (D2) an die Kathode der erste Diode (D1) angeschaltet ist.

4. Schaltungsanordnung nach Anspruch 1, **dadurch gekennzeichnet,** daß zwischen der Kathode der Diode (D2) und dem zweiten Kondensator (C2) eine Spule (L) zur Spannungsüberhöhung am zweiten Kondensator (C2) geschaltet ist.

**Claims**

1. Circuit arrangement for producing an internal supply voltage (UV) in power supplies which operate in accordance with the principle of a forward converter with a switched power switch (S) and a storage choke (L) and in which the internal supply voltage (UV) is higher than the input voltage (UE) of the forward converter, characterised in that in parallel with the break path of the switched power switch (S) storage and blocking means (C1, C2, L1, D2) are provided, comprising a first capacitor (C1) which is charged up during the blocked condition of the power switch (S) via a first diode (D1) connected to the output to the value of the output voltage (UA) of the forward converter and which delivers this charge to the second capacitor (C2) via a further diode (D2) during the conducting phase of the power switch (S), in which arrangement an internal supply voltage (UV) is present which can be picked up across the second capacitor (C2) with respect to a reference point (2) which is common to the input voltage (UE) and which internal supply voltage (UV) is higher than the input voltage (UE) by a difference formed from the output voltage (UA) of the forward converter and the collector-emitter voltage (UCE) of the power switch (S).

2. Circuit arrangement according to Claim 1, characterised in that the first capacitor (C1) is connected with one terminal in front of the storage choke (L) of the forward converter and with its other terminal via the reversely polarized first diode (D) to an output terminal (3) of the forward converter.

3. Circuit arrangement according to Claim 1, characterised in that the second capacitor (C2) is connected with one terminal to the input voltage (UE) and the other terminal is connected to the cathode of the first diode (D1) via the reversely polarized diode (D2).

4. Circuit arrangement according to Claim 1, characterized in that a coil (L) for the voltage increase across the second capacitor (C2) is connected between the cathode of the diode (D2) and the second capacitor (C2).

## Revendications

1. Montage pour produire une tension d'alimentation interne (UV) dans des systèmes d'alimentation en courant, qui fonctionnent selon le principe d'un transformateur à traversée avec un interrupteur de puissance (s) commandé de façon cadencée et comportant une bobine d'arrêt de stockage (L) et dans lesquels la tension d'alimentation interne (UV) est supérieure à la tension d'entrée (UV) du transformateur à traversée,
   caractérisé par le fait
   qu'en parallèle avec la section de commutation de l'interrupteur de puissance (s) commandé de façon cadencée, il est prévu des moyens de mémorisation et de blocage (C1,C2,L1,L2), avec un premier condensateur (C1) qui, lorsque l'interrupteur de puissance (S) est à l'état bloqué, est chargé par l'intermédiaire d'une première diode (D1) raccordée à la sortie, à une valeur de la tension de sortie (UA) du transformateur à traversée et qui, pendant la phase de conduction de l'interrupteur de puissance (S), délivre cette charge par l'intermédiaire d'une autre diode (D2) au second condensateur (C2), ce qui produit une tension d'alimentation interne (UV) qui peut être prélevée sur le second condensateur (C2) par rapport à un point de référence (2) commun à la tension d'entrée (UA) et qui est supérieure à la valeur de cette dernière, d'une différence entre la tension de sortie (UA) du transformateur à traversée et la tension collecteur-émetteur (UCE) de l'interrupteur de puissance (S).

2. Montage suivant la revendication 1, caractérisé par le fait que le premier condensateur (C1) est raccordé à une borne de la bobine d'arrêt de stockage (L) du transformateur à traversée et, par son autre borne, par l'intermédiaire de la première diode (D1) polarisée en inverse, à une borne de sortie (3) du transformateur à traversée.

3. Montage suivant la revendication 1, caractérisé par le fait que le second condensateur (C2) est raccordé par une borne à la tension d'entrée (UA) et que l'autre borne est raccordée à la cathode de la première diode (D1) par l'intermédiaire de la diode (D2) polarisée en inverse.

4. Montage suivant la revendication 1, caractérisé par le fait qu'une bobine (L) servant à accroître la tension aux bornes du condensateur (C2) est branchée entre la cathode de la diode (D2) et le second condensateur (C2).

## FIG 1

## FIG 2